# FASCICULE DE BREVET EUROPEEN

(11) **EP 0 474 520 B1**
(45) Date de publication et mention de la délivrance du brevet: **16.02.1994**
(21) Numéro de dépôt: 91401878.3
(22) Date de dépôt: 08.07.1991
(51) Int. Cl.: A01B 59/048

(54) **Dispositif d'accrochage d'un outil à l'attelage trois points d'un tracteur**
Dreipunktaufhängung eines Schleppers
Three-point hitch of a tractor

(30) Priorité: 07.09.1990 FR 9011103
(43) Date de publication de la demande: 11.03.1992
(73) Titulaire: HUARD S.A., F-44142 Chateaubriant Cédex (FR)
(72) Inventeur: Perret, Louis, F44110 Châteaubriant (FR)
(74) Mandataire: Loyer, Bertrand

(56) Documents cités:
- EP-A- 0 218 299
- DE-A- 3 801 895
- DE-U- 8 631 593
- FR-A- 1 476 693
- GB-A- 2 079 126

## Description

La présente invention concerne d'une manière générale le matériel agricole et plus spécialement les dispositifs prévus sur l'avant-train des outils pour leur solidarisation à l'attelage trois points d'un tracteur.

De manière connue en soi, les outils sont portés au cours des déplacements dans les champs et sont selon leur poids portés ou traînés lors des déplacements sur route.

Lorsque lesdits outils sont portés, l'attelage du tracteur et l'avant-train de l'outil sont soumis à des efforts très importants qui deviennent considérables si le sol est accidenté, ce qui est généralement le cas dans les champs. A titre d'exemple, une charrue portée de 5 ou 6 corps, a un poids d'environ 1800 kg et son centre de gravité est à environ 2 mètres de la traverse de l'attelage.

Lorsqu'une telle charrue est portée ce qui se produit à chaque fin de sillon, pour changer le sens du travail, la bielle supérieure du dispositif d'attelage est soumise à un effort statique d'environ 60 000 N.

Les efforts dynamiques auxquels sera soumise la bielle sont généralement doublés ou triplés lorsque le terrain est accidenté.

Il est alors apparu nécessaire de proposer un dispositif d'attelage permettant une diminution sensible des efforts dans l'avant train de l'outil au cours des transports en position portée.

Un second problème auquel sont confrontés les utilisateurs de matériel agricole concerne le fait qu'il est nécessaire de décrocher la bielle supérieure de l'attelage lorsque l'outil est muni d'une roue et que l'on veut transporter ledit outil en le traînant, par exemple sur route.

Cette manoeuvre est usuellement malcommode à réaliser.

L'invention a alors pour but de proposer un dispositif d'attelage d'un outil qui permette de résoudre ces deux problèmes de manière efficace.

Un tel dispositif d'attelage doit d'une part assurer un amortissement de l'effort supporté par l'attelage lorsque l'outil est porté tout en ne perturbant pas l'action du dispositif de contrôle d'effort au cours du travail de l'outil, et, d'autre part permettre de libérer très simplement la bielle supérieure de tout effort lorsque l'outil doit être traîné par le tracteur.

Usuellement, les outils sont accrochés à l'attelage trois points d'un tracteur par leur avant-train présentant à cet effet une potence de manière à ce que le point supérieur de l'attelage soit sur la partie supérieure de cette potence.

Afin de proposer un dispositif d'accrochage résolvant les problèmes évoqués plus haut, l'on prévoit de mettre en oeuvre une potence en deux parties avant et arrière.

De telles potences en deux parties sont déjà connues dans le domaine de la machine agricole mais ont toujours été utilisées dans des buts totalement différents.

C'est ainsi que le modèle d'utilité allemand N° 86 31 593 présente un outil de fauchage destiné à être attelé à l'attelage trois points situé à l'avant du tracteur. La potence de cet outil est en deux parties afin de former un quadrilatère déformable à l'encontre de l'action d'un ressort. Une telle disposition permet d'autoriser des mouvements de l'outil par rapport au tracteur afin de lui permettre de suivre les inégalités du terrain et d'éviter ainsi que les organes de coupe heurtent la terre, elle ne permet nullement d'amortir les efforts subis par l'attelage au cours des transports de l'outil en position porté.

Ce document allemand constitue l'art antérieur visé dans le préambule de la revendication 1.

Le brevet français N° 1 476 693 décrit pour sa part une potence en deux parties dont la partie avant est liée au tracteur tandis que la partie arrière est solidaire de l'outil, ici une remorque. Cette disposition permet, par un basculement de la partie de potence liée au tracteur, d'atteler la remorque au tracteur sans que le conducteur ait besoin de quitter son poste de conduite. L'attelage se fait en faisant reculer le tracteur de manière à positionner l'extrémité supérieure de la partie de potence liée au tracteur conformée en crochet sous un moyen d'accrochage complémentaire présenté par la partie de potence solidaire de la remorque et, en ramenant la partie de potence liée au tracteur dans une position verticale ce qui assure le verrouillage des deux parties de potence. Un tel attelage dans lequel les deux parties de potence sont liées l'une à l'autre lorsque la remorque est trainée par le tracteur permet nullement de libérer les efforts dans la bielle supérieur de l'attelage comme recherché par l'invention.

L'invention propose alors un dispositif destiné à l'accrochage d'un outil par son avant-train à l'attelage trois points d'un tracteur, comportant deux points d'accrochage inférieurs et un supérieur sur ledit avant-train et sur une potence globalement verticale, du type dans lequel ladite potence est en deux parties avant et arrière, avec la partie avant portant le point d'accrochage supérieur et la partie arrière solidaire de l'avant-train de l'outil portant les points d'accrochage inférieurs, lesdites parties avant et arrière étant mobiles en rotation l'une par rapport à l'autre autour d'un axe horizontal, caractérisé en ce que :
- la partie arrière de la potence présente au moins une face verticale disposée longitudinalement par rapport au sens d'avancement du tracteur portant des galets supérieur et inférieur montés libres en rotation sur des axes perpendiculaires à ladite face verticale longitudinale, et la partie avant de la potence est disposée à l'arrière de ces galets avec des faces planes verticales tournées vers l'avant en appui contre lesdits galets,
- le galet supérieur est effaçable tandis que le galet inférieur est fixe,
- lesdites parties avant et arrière de la potence sont mobiles l'une par rapport à l'autre en translation dans le sens vertical à l'encontre de moyens élastiques,
- l'axe de rotation est le galet inférieur après effacement du galet supérieur.

Le dispositif selon l'invention est encore remarquable en ce que :
- le galet supérieur est monté déplaçable verticalement dans une lumière ou mortaise de la partie arrière de la potence afin d'être effaçable,
- la partie avant de la potence présente une extrémité supérieure disposée entre le galet supérieur et une face verticale transversale de la partie arrière de la potence et comporte une face plane horizontale formant avec la face plane verticale un angle dans lequel est positionné ledit galet supérieur,
- la lumière ou mortaise est de dimension telle que, lorsque le galet est dans sa position extrême supérieure, il est au-dessus de l'extrémité supérieure de la partie avant ce qui permet son effacement,
- une paroi est disposée à distance de la face plane verticale afin de former une fourche de la partie avant dans laquelle est positionné le galet inférieur ce qui assure le positionnement de ladite partie avant par rapport audit galet lors des mouvements de rotation relatifs desdites parties avant et arrière de la potence,
- les moyens élastiques sont formés par un vérin solidaire de la partie arrière de la potence et relié à un accumulateur oléopneumatique, ledit vérin comportant un piston plongeur sur lequel s'appuie la partie avant de la potence par une butée,
- les moyens élastiques sont formés par une butée en caoutchouc ou élastomère, un ressort de traction ou de compression, ou un agencement de rondelles Belleville.

L'invention sera mieux comprise à la lecture de la description qui va suivre d'un mode de réalisation de celle-ci en regard du dessin sur lequel :
- la figure 1 est une vue en coupe partielle du dispositif de l'invention dans la position de travail d'un outil porté,
- la figure 2 est une vue analogue à la figure 1 pour la position relevée du dispositif,

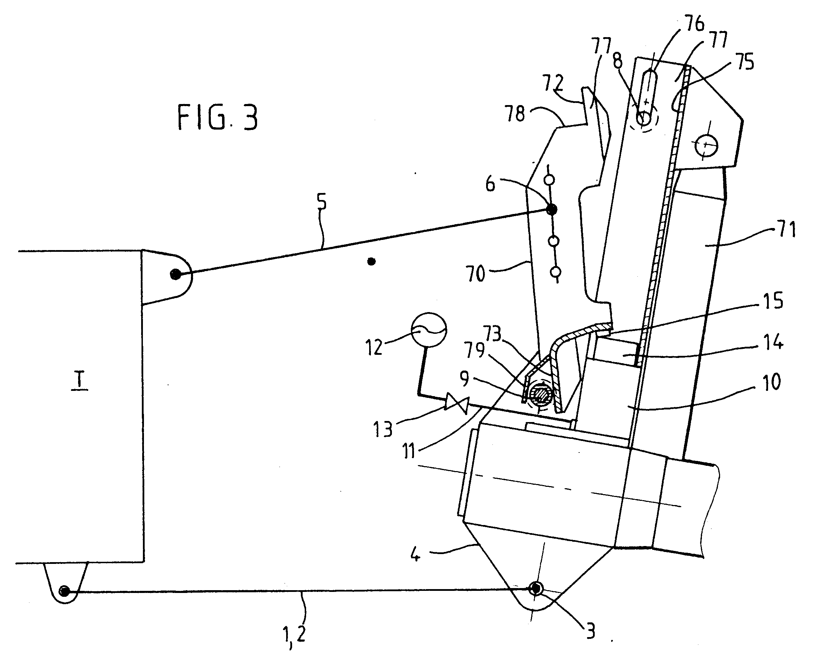

- la figure 3 est une vue analogue à la figure 1 pour la position de transport traîné.

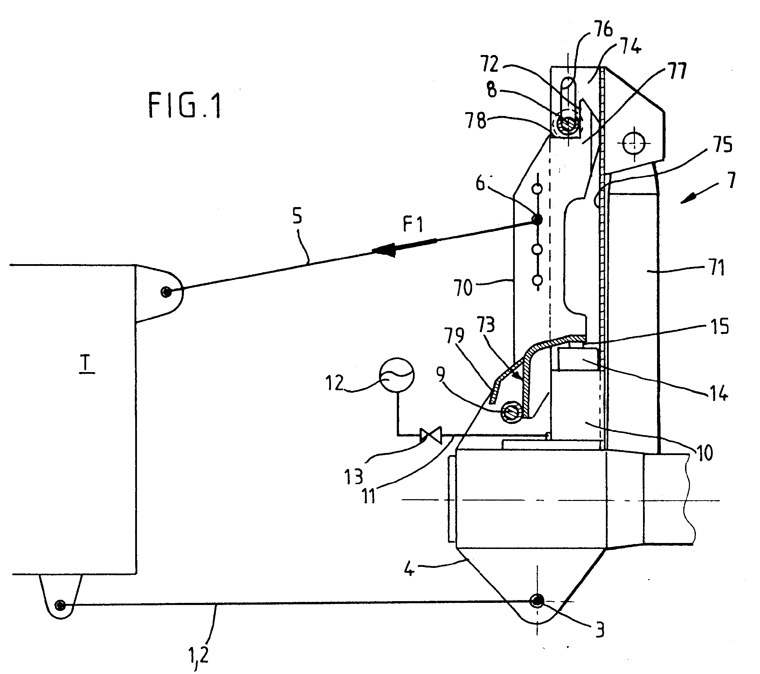

Sur la figure 1, on a schématisé l'arrière d'un tracteur T avec son attelage trois points relié par les bielles inférieures 1, 2 et supérieure 5 au dispositif situé sur l'avant-train 4 d'un outil non représenté.

Ce dispositif comporte des points d'accrochage inférieurs 3 et supérieur 6. De manière connue en soi, le point d'accrochage supérieur 6 est prévu sur une potence 7 globalement perpendiculaire à l'avant-train 4. Dans l'exemple représenté, quatre possibilités sont offertes à l'utilisateur pour accrocher la bielle supérieure 5 ce qui permet un réglage de la position de celle-ci.

Ladite potence 7 est en deux parties 70, 71 ; la bielle supérieure 5 est accrochée sur la partie avant 70 tandis que la partie arrière 71 est solidaire de l'avant-train 4 de l'outil et porte les points d'accrochage inférieurs 3, dont un seul est visible sur le dessin.

Afin de résoudre les problèmes posés, lesdites parties 70, 71 sont mobiles l'une par rapport à l'autre en translation dans la direction verticale et en rotation autour d'un point fixe.

A cet effet, la partie arrière 71 présente deux faces verticales 74 formant chape, dont une seule est visible sur la figure, disposées longitudinalement par rapport au sens d'avancement du tracteur T sur laquelle sont montés deux galets 8 et 9 libres en rotation.

Le galet inférieur 9 est fixe en position sur ladite face verticale longitudinale 74 tandis que le galet supérieur 8 est libre en translation dans le sens vertical par un montage dans une lumière ou une mortaise 76 de ladite face 74.

Ces galets 8 et 9 servent d'appui à des chemins de roulement formés par des faces planes verticales 72, 73 tournées vers l'avant de la partie avant 70 lors des mouvements de translation relative des parties 70 et 71 de la potence. Les mouvements de rotation se font autour du galet inférieur 9 après effacement du galet supérieur 8.

La partie arrière 71 de la potence comporte une face plane verticale 75 disposée transversalement à une distance de la lumière 76 dans laquelle est positionné le galet 8 telle que l'extrémité supérieure 77 de la partie avant 70 puisse être disposée longitudinalement entre ledit galet 8 et ladite face verticale transversale 75.

La position du galet 8 dans la lumière 76 est définie par son appui sur une face plane horizontale 78 de ladite extrémité supérieure 77. Ladite face plane horizontale 78 forme avec la face verticale 72 un angle droit dans lequel est positionné le galet 8. Par ce montage, la partie avant est en appui contre le galet 8 dans le sens longitudinal et entraîne celui-ci dans la lumière 76 lors des mouvements relatifs de translation dans le sens vertical entre les parties 70, 71 de la potence 7.

A son extrémité inférieure, la partie avant 70 de la potence présente une paroi 79 disposée à distance de la face verticale 73 formant chemin de roulement.

Le galet 9 est ainsi positionné à l'intérieur d'une fourche en étant en appui contre la face 73 uniquement afin qu'il ne se produise pas de coincement lorsque la partie avant 70 portant cette fourche se déplace par rapport audit galet 9. Cette fourche assure la conservation de la position de la partie avant 70 lors des mouvements de rotation de celle-ci par rapport à la partie arrière 71 autour du point fixe formé par ledit galet 9.

Suivant une autre disposition de l'invention, la partie avant 70 est en appui par une butée 15 sur le piston plongeur 14 d'un vérin hydraulique 10 solidarisé à la partie arrière 71 de la potence 7.

Ce vérin 10 est relié par une canalisation 11 à un accumulateur oléopneumatique 12.

Cette canalisation 11 peut être obturée par un robinet 13.

Le dispositif de vérin 10 pourrait bien entendu être remplacé par tout autre moyen élastique, par exemple une butée en caoutchouc ou élastomère, un ressort de traction ou de compression ou un agencement de rondelles Belleville.

Le dispositif ayant maintenant été décrit, nous allons exposer son fonctionnement.

Dans la position représentée à la figure 1, l'outil est porté par l'attelage du tracteur et est en position de travail c'est-à-dire baissé au contact du sol.

Une force F1 de traction ou de compression s'exerce dans la bielle supérieure 5 et la partie avant 70 est en appui par ses faces verticales 72, 73 contre les galets 8, 9 ce qui assure le déplacement de la partie arrière 71 et donc de l'outil, dont l'avant-train 4 porte la potence selon l'invention, en réponse au déplacement du tracteur.

Dans cette position de travail, la bielle supérieure est inclinée d'un angle de 10 à 15° par rapport à l'horizontale. Il en résulte une composante verticale qui tend à faire déplacer la partie avant 70 vers le bas par rapport à la partie arrière à l'encontre du vérin hydraulique 10 qui absorbe les variations de ladite composante verticale.

La composante verticale de la force F1 est toutefois, dans cette position de travail, assez faible pour ne pas perturber le dispositif de contrôle d'effort qui équipe habituellement le tracteur afin d'assurer le relevage de l'outil lorsqu'il rencontre un obstacle.

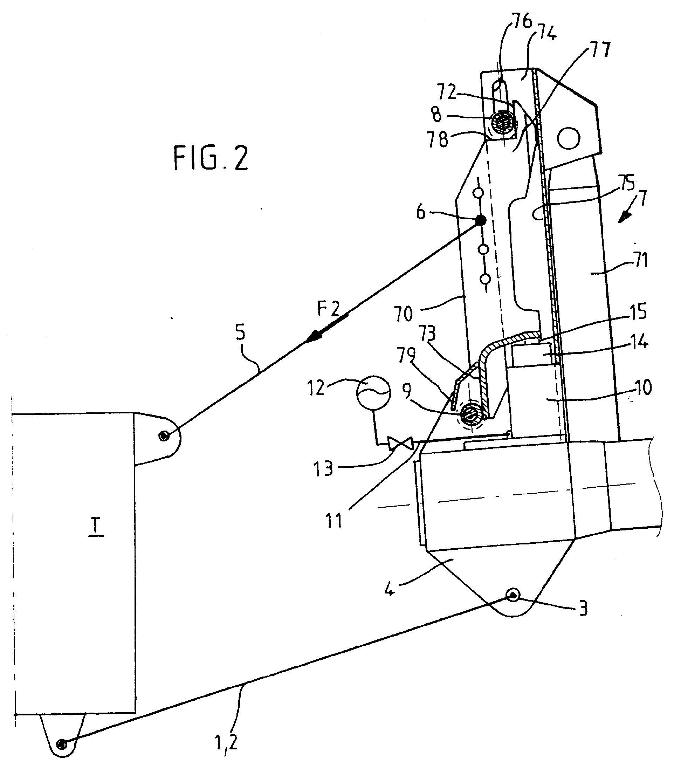

A la figure 2, on a représenté le dispositif selon l'invention dans la position pour laquelle l'outil est relevé.

Comme on peut le voir, la force F2 qui s'exerce dans la bielle supérieure 5 est alors largement plus inclinée par rapport à l'horizontale.

Cette inclinaison varie usuellement entre 30 et 45°, la composante verticale de cette force F2 est alors importante.

Lorsque, en bout de sillon, l'outil est ainsi relevé et que le tracteur roule sur un sol non plat, on comprend que les efforts auxquels est soumis le dispositif entraîne les parties 70, 71 en déplacement relatif globalement vertical. Ce déplacement relatif est autorisé par la coopération des faces 72, 73 avec les galets 8 et 9, et est amorti par l'appui de la partie 70 sur le vérin 10 et les variations de pression ainsi produites. L'accumulateur 12 autorise la variation du volume du liquide hydraulique contenu dans le vérin.

Le déplacement relatif des parties 70 et 71 est limité par la course du piston plongeur 14 et par la longueur de la mortaise 76.

Le dispositif selon l'invention présente encore l'avantage de permettre un déverrouillage rapide et aisé de la bielle supérieure 5 afin que l'outil muni d'une roue puisse être traîné derrière le tracteur T en étant uniquement attaché par les bielles inférieures 1, 2.

Pour obtenir ce déverrouillage, il suffit en effet de faire coulisser le galet 8 vers le haut de la mortaise 76. La dimension de celle-ci est prévue telle que dans cette position extrême supérieure le galet 8 soit au-dessus de l'extrémité supérieure 77 de la partie 70 ce qui permet de l'effacer.

La partie 70 n'étant plus en appui contre le galet 8 par la face 72 bascule alors autour du galet 9 inférieur.

La bielle supérieure 5 reste attachée au point d'accrochage 6 de la partie 70 mais n'est plus en relation avec l'outil qui peut alors être traîné derrière le tracteur.

De manière avantageuse, il est possible de prévoir que le conducteur puisse, de son siège, avoir accès au galet 8 afin de le déverrouiller. A cet effet, on prévoit un câble ou un lien de toute forme actionnant un levier basculant relié au galet 8.

## Revendications

1. Dispositif destiné à l'accrochage d'un outil par son avant-train (4) à l'attelage trois points d'un tracteur (T), comportant deux points d'accrochage inférieurs (3) et un supérieur (6) sur ledit avant-train (4) et sur une potence (7) globalement verticale, du type dans lequel ladite potence (7) est en deux parties avant (70) et arrière (71), avec la partie avant (70) portant le point d'accrochage supérieur (6) et la partie arrière (71) solidaire de l'avant-train (4) de l'outil portant les points d'accrochage inférieurs (3), lesdites parties avant (70) et arrière (71) étant mobiles en rotation l'une par rapport à l'autre autour d'un axe horizontal, caractérisé en ce que :
- la partie arrière (71) de la potence (7) présente au moins une face verticale (74) disposée longitudinalement par rapport au sens d'avancement du tracteur (T) portant des galets supérieur et inférieur (8, 9) montés libres en rotation sur des axes perpendiculaires à ladite face verticale longitudinale (74), et la partie avant (70) de la potence est disposée à l'arrière de ces galets (8, 9) avec des faces planes verticales (72, 73) tournées vers l'avant en appui contre lesdits galets,
- le galet supérieur (8) est effaçable tandis que le galet inférieur (9) est fixe,
- lesdites parties avant et arrière (70, 71) de la potence (7) sont mobiles l'une par rapport à l'autre en translation dans le sens vertical à l'encontre de moyens élastiques (10, 14),
- l'axe de rotation est le galet inférieur (9) après effacement du galet supérieur (8).

2. Dispositif selon la revendication 1, caractérisé en ce que le galet supérieur (8) est monté déplaçable verticalement dans une lumière ou mortaise (76) de la partie arrière (71) de la potence (7) afin d'être effaçable.

3. Dispositif selon l'une quelconque des revendications 1 ou 2, caractérisé en ce que la partie avant (70) de la potence (7) présente une extrémité supérieure (77) disposée entre le galet supérieur (8) et une face verticale transversale (75) de la partie arrière (71) de la potence (7) et comporte une face plane horizontale (78) formant avec la face plane verticale (72) un angle dans lequel est positionné ledit galet supérieur (8).

4. Dispositif selon la revendication 2 ou 3, caractérisé en ce que la lumière ou mortaise (76) est de dimension telle que, lorsque le galet (8) est dans sa position extrême supérieure, il est au-dessus de l'extrémité supérieure (77) de la partie avant (70) et donc effacé.

5. Dispositif selon l'une quelconque des revendications précédentes, caractérisé en ce qu'une paroi (79) est disposée à distance de la face plane verticale (73) afin de former une fourche de la partie avant (70) dans laquelle est positionné le galet inférieur (9) ce qui assure le positionnement de ladite partie avant (70) par rapport audit galet (9) lors des mouvements de rotation relatifs desdites parties avant (70) et arrière (71) de la potence (7).

6. Dispositif selon l'une quelconque des revendications 1 à 5, caractérisé en ce que les moyens élastiques sont formés par un vérin (10) solidaire de la partie arrière (71) de la potence (7) et relié à un accumulateur oléopneumatique (12), ledit vérin comportant un piston plongeur (14) sur lequel s'appuie la partie avant (70) de la potence (7) par une butée (15).

7. Dispositif selon l'une quelconque des revendications 1 à 5, caractérisé en ce que les moyens élastiques sont formés par une butée en caoutchouc ou élastomère, un ressort de traction ou de compression, ou un agencement de rondelles Belleville.

## Patentansprüche

1. Vorrichtung zum Anhängen eines Geräts mittels dessen Laufgestell (4) an die Dreipunktkupplung eines Schleppers (T), mit zwei unteren Anhängepunkten (3) und einem oberen (6) auf dem Laufgestell (4) und auf einem insgesamt vertikalen Träger (7), wobei der Träger zwei Teile, nämlich ein vorderes (70) und ein hinteres (71), aufweist und der vordere Teil (70) den oberen Anhängepunkt (6) und der hintere Teil (71), der fest mit dem Laufgestell (4) des Geräts verbunden ist, die unteren Anhängepunkte (3) trägt, und wobei der vordere (70) und der hintere (71) Teil zueinander um eine Horizontalachse drehbeweglich sind, **dadurch gekennzeichnet,** daß
- der hintere Teil (71) des Trägers (7) wenigstens eine vertikale Fläche (74) aufweist, die längs der Richtung der Vorwärtsbewegung des Schleppers (T) ausgerichtet ist und obere (8) sowie untere (9) Rollen trägt, die frei drehbar auf zur vertikalen, längs verlaufenden Fläche (74) senkrechten Achsen angebracht sind, und daß der vordere Teil (70) des Trägers mit ebenen vertikalen Flächen (72, 73) hinter diesen Rollen (8, 9) versehen ist, die nach vorne gerichtet sind und an den Rollen anliegen,
- daß die obere Rolle (8) entfernbar ist, wohingegen die untere Rolle (9) in ihrer Lage fest ist,
- daß der vordere und der hintere Teil (70, 71) des Trägers (7) zueinander in vertikaler Translationsbewegung gegen elastische Mittel (10, 14) verschiebbar sind, und
- daß nach der Entfernung der oberen Rolle (8) die untere Rolle (9) die Drehachse bildet.

2. Vorrichtung nach Anspruch 1, dadurch gekennzeichnet, daß die obere Rolle (8) in einem Langloch oder einer Aussparung (76) des hinteren Teils (71) des Trägers (7) vertikal verschiebbar eingebaut ist, damit sie verschoben werden kann.

3. Vorrichtung nach einem der Ansprüche 1 oder 2, dadurch gekennzeichnet, daß der vordere Teil (70) des Trägers (7) ein oberes Ende (77), das zwischen der oberen Rolle (8) und einer vertikalen, quer verlaufenden Fläche (75) des hinteren Teils (71) des Trägers (7) angeordnet ist, sowie eine ebene horizontale Fläche (78) aufweist, die mit der ebenen vertikalen Fläche (72) einen Winkel bildet, in dem die obere Rolle (8) angeordnet ist.

4. Vorrichtung nach Anspruch 2 oder 3, dadurch gekennzeichnet, daß das Langloch oder die Aussparung (76) so dimensioniert ist, daß, wenn die Rolle (8) sich in ihrer oberen Endlage befindet, sie oberhalb des oberen Endes (77) des vorderen Teils (70) und folglich entfernt ist.

5. Vorrichtung nach einem der vorhergehenden Ansprüche, dadurch gekennzeichnet, daß eine Wand (79) in einem Abstand von der ebenen vertikalen Fläche (73) angeordnet ist, um eine Gabel am vorderen Teil (70) auszubilden, in der die untere Rolle (9) angebracht ist, was die Positionierung des vorderen Teils (70) in bezug auf die Rolle (9) während relativer Drehbewegungen des vorderen (70) und des hinteren (71) Teils des Trägers (7) sichert.

6. Vorrichtung nach einem der Ansprüche 1 bis 5, dadurch gekennzeichnet, daß die elastischen Mittel durch einen Zylinder (10) gebildet sind, der fest mit dem hinteren Teil (71) des Trägers (7) verbunden und an einen Öl-Druckluft-Speicher (12) angeschlossen ist und der einen Tauchkolben (14) aufweist, auf dem sich der vordere Teil (70) des Trägers (7) über ein Widerlager (15) abstützt.

7. Vorrichtung nach einem der Ansprüche 1 bis 5, dadurch gekennzeichnet, daß die elastischen Mittel von einem Gummi- oder Elastomeranschlag, einer Zug- oder Druckfeder oder von einer Anordnung von Belleville-Dichtungsringen gebildet sind.

## Claims

1. A device intended for fixing an implement by its fore-carriage (4) to the three-point linkage of a tractor (T), including two lower fixing points (3) and an upper fixing point (6) on said fore-carriage (4) and on a generally vertical support (7), of the type in which said support (7) is in two portions front (70) and rear (71), with the front portion (70) carrying the upper fixing point (6) and the rear portion (71) rigid with the fore-carriage (4) of the implement carrying the lower fixing points (3), said front (70) and rear (71) portions being movable in rotation with respect to one another about a horizontal axis, characterised in that:
- the rear portion (71) of the support (7) has at least one vertical face (74) disposed longitudinally with respect to the direction of advance of the tractor (T) carrying upper and lower rollers (8,9) freely rotatably mounted on axes perpendicular to said longitudinal vertical face (74), and the front portion (70) of the support is disposed behind these rollers (8,9) with vertical forwardly facing flat faces (72,73) bearing against said rollers,
- the upper roller (8) is retractable, whilst the lower roller (9) is fixed,
- said front and rear portions (70,71) of the support (7) are movable in translation with respect to one another in the vertical direction in opposition to resilient means (10,14),
- the axis of rotation is the lower roller (9) after retraction of the upper roller (8).

2. A device according to Claim 1, characterised in that the upper roller (8) is vertically movably mounted in a slot or recess (76) in the rear portion (71) of the support (7) in order to be retractable.

3. A device according to either of Claims 1 or 2, characterised in that the front portion (70) of the support (7) has an upper end (77) disposed between the upper roller (8) and a transverse vertical face (75) of the rear portion (71) of the support (7) and has a horizontal flat face (78) forming with the vertical flat face (72) an angle in which said upper roller (8) is positioned.

4. A device according to Claim 2 or 3, characterised in that the slot or recess (76) is of a size such that, when the roller (8) is in its upper extreme position, it is above the upper end (77) of the front portion (70) and thus retracted.

5. A device according to any one of the preceding claims, characterised in that a wall (79) is disposed at a distance from the vertical flat face (73) in order to form a fork of the front portion (70) in which is located the lower roller (9) which ensures the positioning of said front portion (70) with respect to said roller (9) during relative rotational movements of said front (70) and rear (71) portions of the support (7).

6. A device according to any one of Claims 1 to 5, characterised in that the resilient means are formed by a jack (10) rigid with the rear portion (71) of the support (7) and connected to an oleopneumatic accumulator (12), said jack having a plunger piston (14) on which bears the front portion (70) of the support (7) through an abutment (15).

7. A device according to any one of Claims 1 to 5, characterised in that the resilient means are formed by an abutment of rubber or elastomer, a traction or compression spring, or an arrangement of Belleville washers.
